# EUROPÄISCHE PATENTSCHRIFT

(11) **EP 0 587 153 B1**
(45) Veröffentlichungstag und Bekanntmachung des Hinweises auf die Patenterteilung: **04.02.1998**
(21) Anmeldenummer: 93114453.9
(22) Anmeldetag: 09.09.1993
(51) Int. Cl.: F16J 9/00, F16J 15/44, F02C 7/28, F16J 15/22

(54) **Einrichtung zur Abdichtung fluidisch unterschiedlich druckbeaufschlagter Räume zwischen relativ zueinander beweglichen Gehäusen, insbesondere von Flugtriebwerken und Verfahren zur Herstellung eines Dichtringes**
Sealing device between spaces of different fluidic pressions for relatively movable housings of aircraft engines and method for manufacturing a sealing ring
Dispositif d'étanchéification entre des chambres de pression fluidiques différentes pour des boîtiers relativement mobiles de groupe motopropulseurs et procédé pour fabriquer un joint annulaire d'étanchéité

(30) Priorität: 11.09.1992 DE 4230412; 10.11.1992 DE 4237886
(43) Veröffentlichungstag der Anmeldung: 16.03.1994
(73) Patentinhaber: MTU MOTOREN- UND TURBINEN-UNION MÜNCHEN GMBH, 80976 München (DE)
(72) Erfinder: Merz, Herbert, D-8000 München 50 (DE); Gross, Ingeborg, Dr., D-8130 Starnberg (DE); Sassmannshausen, Harald, D-8080 Fürstenfeldbruck (DE)

(56) Entgegenhaltungen:
- EP-A- 0 133 786
- EP-A- 0 466 923
- DE-A- 1 475 768
- DE-A- 1 934 469
- DE-A- 3 127 523
- DE-U- 9 105 116
- US-A- 3 646 846
- US-A- 4 949 620

## Beschreibung

Die Erfindung bezieht sich auf eine Einrichtung nach dem Oberbegriff des Patentanspruchs 1 und auf ein Verfahren zur Herstellung eines Dichtringes.

Bekannt sind balgförmige Gummi- oder Gummi-Textildichtungen, um z.B. bei Luftfahrzeugen eine Abdichtung zwischen zellenseitigem Lufteinlaufrohr bzw. -gehäuse und einem triebwerksseitigen Lufteinlaufrohr bzw. -gehäuse (Niederdruckverdichter) vorzusehen. Derartige Dichtungen sind u.a. verhältnismäßig teuer und verlangen ein großes Einbauvolumen.

Zur Abdichtung zwischen Kolben und Zylinder einer Brennkraftmaschine ist es aus der DE-OS 22 35 694 bekannt, einen in seiner Krümmungsrichtung durch C-Fasern verstärkten Kolbenring zu verwenden.

Bei einer Einrichtung nach der eingangs genannten Art sind die wesentlichen Anforderungen an den Dichtung folgende:
- Aufnahme axialer Relativbewegungen und gleichzeitiger Ausgleich radialer hoch- und niederfrequenter Relativbewegungen zwischen Trieberks- bzw. Verdichtergehäuse und zellenseitigem Gehäuse;
- optimale Reibverschleißeigenschaften bei unterschiedlichen Temperaturen (etwa -60 bis 150°C);
- Beherrschung auftretender Schub- und Biegebelastungen;
- hohe Biegesteifigkeit in Umfangsrichtung zwecks optimaler Abdichtung;
- vergleichsweise hohe Schubsteifigkeit, um auch bei relativ weit aus der Nut ausgefahrenem Ring Stülp-Beulungs-Effekte desselben zu verhindern;
- Beständigkeit gegenüber Scherkraftbeanspruchungen, hervorgerufen durch die Anlage des Dichtringes an einer Nutflanke, insbesondere, bei verhältnismäßig ausgeprägter Druckdifferenz zwischen den abzudichtenden Räumen,
- möglichst geringes Baugewicht.

Aus der DE-A 1 934 469 ist ein Dichtungsring für Hubkolbenmaschinen mit den Merkmalen des Obergegriffs des Patentanspruchs 1 bekannt. Dieser Dichtungsring weist zusätzlich zu in Umfangsrichtung verlaufenden Kohlefasern inTeilbereichen der Kunstharzmatrix anders gerichtete Fasem auf. Eine planmäßige Ausrichtung der Fasern zur Erhöhung der Schubsteifigkeit oder zur Erhöhung der Biegesteifigkeit oder auch eine Verbesserung der Beständigkeit gegenüber Scherkraftbeanspruchungen mit Bezug auf die Anlage des Dichtringes an einer Nutflanke kann durch diese Ausbildung nicht erreicht werden.

Der Erfindung liegt die Aufgabe zugrunde, eine Einrichtung nach der eingangs genannten Art anzugeben, die insbesondere bezüglich der Ausbildung und Herstellung des Dichtringes, unter Beherrschung von betriebsbedingten Einflüssen im wesentlichen aus Differenzdrücken, variablen Bauteiltemperaturen, Gehäuseschwingungen und -relativbewegungen, eine gewichtlich leichte optimale Abdichtung schafft.

Die gestellte Aufgabe ist mit den Merkmalen des Kennzeichnungsteils des Patentanspruchs 1 erfindungsgemäß gelöst.

Bei der erfindungsgemäßen Einrichtung sorgen die C-Fasern, aufgrund ihrer Anordnung für die benötigte Umfangssteifigkeit des Ringes und prägen dem Ring die erforderliche Vorspannung bzw. "Federwirkung" auf so daß der Dichtring mit der notwendigen Anpreßkraft am betreffenden einen Rohr bzw. Gehäuse abdichtend aufsitzt.

Vorteilhaft ist die äußere Umkleidung des Grundkörpers, so, daß er
- auch bei extremen Differenzdruckbelastungen den auftretenden einseitigen bzw. einschnittigen Scherkraft- und Biegebeanspruchungen gewachsen ist,
- die erforderliche Bauteilsteifigkeit gegen Stülpung bzw. Torsion beim Austauchen aus der Nut aufweist,
- verschleißarm ist.

Die eingangs umrissenen Anforderungen können zusammen mit der angegebenen Umkleidung des Grundkörpers aus mehreren Schichten erfüllt werden. Die Schichten können jeweils aus sich überkreuzenden, miteinander verflochtenen oder verwobenen C-Fasern bestehen. Die C-Fasern können vorzugsweise relativ zur Umfangsrichtung unter etwa ±30° bis ±60° geneigt sein. Eine in derartiger Weise äußerste bzw. zuletzt aufgebrachte Schicht ist bei geeigneter Wahl des Matrixharzes auch bezüglich der Beherrschung des Reibverschleißes geeignet, zumal die sich überkreuzende C-Faser-Anordnung am Ringumfang hierfür besser als eine "unidirektionale" Anordnung geeignet ist und die graphitische Faserkomponente einen geringen Reibverschleiß an glatten Nutgegenflächen erzeugt; in Kombination mit der Duroplast-Matrix ist so auch bei Temperaturen >100°C nur geringer Reibverschleiß des Ringes zu erwarten.

Durch Ausbildung einer labyrinthartigen Dichtung mit mehreren axial aufeinander folgenden Nuten und Dichtringen kann die Differenz- Druck-Dichtung -je nach Anforderungen- optimiert werden.

Vorteilhaft wird ferner der Ringstoß nicht als ebene und glatte Trennstelle ausgeführt, sondern ein im Betrieb sich einwandfrei abdichtend überlappender Bauteilendverschluß des Dichtringes vorgesehen, wobei eine spiralenförmige Ineinanderschiebung der betreffenden Ringenden mit Umfangsarretierung zwecks erleichterter Montage möglich ist.

Bezüglich vorteilhafter Ausgestaltungen der Einrichtung nach Anspruch 1 wird auf die Merkmale der Dichtungseinrichtung nach den Patentansprüchen 2 bis 10 verwiesen.

Die Erfindung betrifft auch das Verfahren nach Patentanspruch 11 zur Herstellung des Dichtringes der erfindungsgemäßen Einrichtung, vorteilhafte Verfahrensmerkmale ergeben sich aus den Ansprüchen 12 und 13.

Anhand der Zeichnungen ist die Erfindung beispielsweise weiter erläutert; es zeigen:
- Fig. 1: einen Längsschnitt der Einrichtung an abschnittsweise dargestellten Gehäusen, hier zwischen dem Eintrittsgehäuse des Niederdruckverdichters und einem radial mit Abstand dazu angeordneten Abschnitt eines zellenseitigen Gehäuseabschnitts,
- Fig. 2: eine schematisierte Abwandlung der Fig. 1, worin die Einrichtung als labyrinthartige Mehrfach-Kolbenringdichtung ausgebildet ist,
- Fig. 3: eine perspektivische Darstellung eines Ringabschnitts dergestalt, daß der Kern oder Grundkörper des Dichtringes am gesamten äußeren Umfang mehrschichtig, insbesondere versteifend und verschleißarm ausgebildet ist, mit hier in Bezug auf die äußerste Schicht schematisch verdeutlichter Überkreuz-Verwebung der C-Fasern in relativ zur Umfangsrichtung geneigter Faserlage und
- Fig. 4: eine durch einen Umfangsschnitt gemäß Blickrichtung X der Fig. 1 verkörperte Bauteilüberlappung zwischen zwei Enden des Dichtringes.

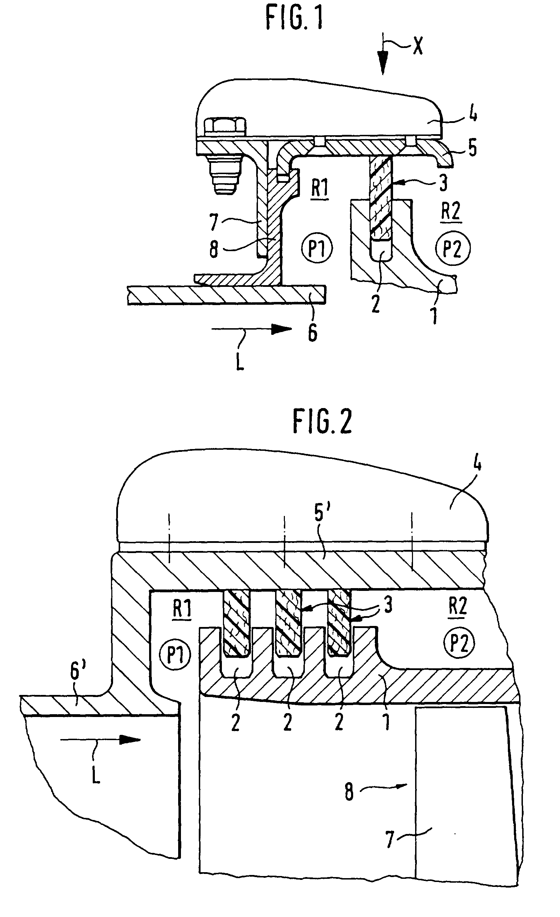

Fig. 1 zeigt den radial innen liegenden Abschnitt eines Eintrittsgehäuses 1 eines Niederdruckverdichters ; das Eintrittsgehäuse 1 weist eine außen offene Umfangsnut 2 für den Dichtring 3 auf, der durch seine vorgespannte Ausbildung radial außen abdichtend an der Gegendichtfläche eines mit einem Zellenteil 4 verbundenen Gehäuseabschnitts 5 aufsitzt. Das stromabwärtige Ende eines die Verdichterluftströmung L führenden Gehäuses 6 ist über flanschartige Gehäusebauteile 7,8 mit dem Zellenteil 4 und mit dem Gehäuseabschnitt 5 verbunden. Stromauf der Dichtung, im Ringraum R1, bildet sich ein Druck P1 aus, der je nach Betriebs- bzw. Flugzustand größer oder kleiner als der stromab der Dichtung im Raum R2 herrschende Druck P2 ist.

Fig. 2 verkörpert eine labyrinthartige Dichtungseinrichtung mit den am Eintrittsgehäuse 1 in axialer Richtung mit Abstand aufeinander folgenden Umfangsnuten 2 mit jeweils in zu Fig. 1 schon genannter Weise darin sitzenden kolbenringartigen Dichtringen 3, die am axial abgewinkelten einstückigen Teil 5' des mit einem Zellenteil 4 verbundenen Lufteinlauf-- Gehäuses 6' abdichtend aufsitzen. Mit 7 ist schematisch eine zum Eintritts-Laufschaufel-Gitter 8 des Niederdruckverdichters gehörende Laufschaufel bezeichnet.

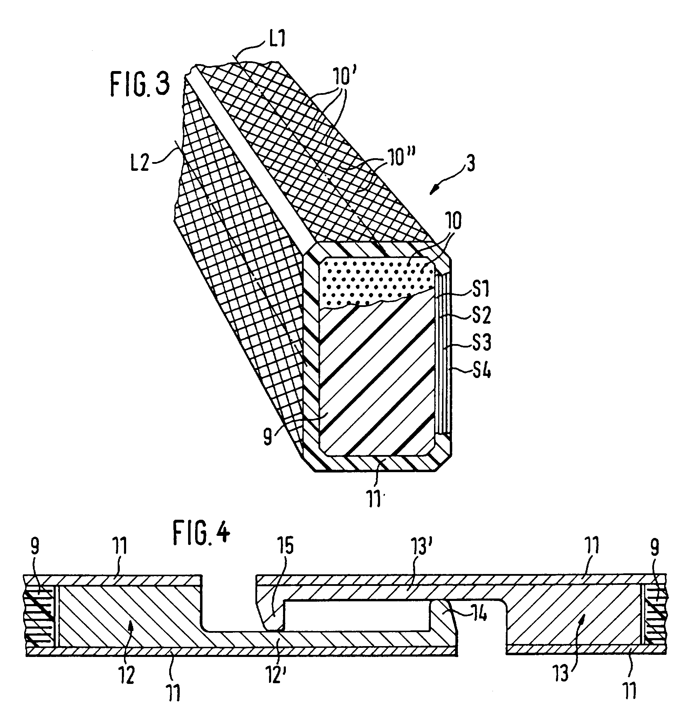

Gemäß Fig. 3 besteht jeder Grundkörper 9 oder Kern des Dichtringes 3 aus in eine Duroplastharz-Matrix eingebundenen, in Ringumfangsrichtung "unidirektional" angeordneten Kohle (C)-Fasern 10. Der Grundkörper 9 ist am äußeren Umfang gänzlich versteifend und verschleißfest umkleidet.

Die Umkleidung 11 des Dichtringes 3 besteht aus mehreren Schichten S1,S2,S3,S4 von in eine Kunstharz-, insbesondere Duroplast-Harz-Matrix eingebundenen C-Fasern 10',10", die jeweils unter einem Winkel von etwa ±30° bis ±60° zur Umfangsrichtung - also relativ zu den schematisch angedeuteten Umfangslinien L1,L2 - miteinander verwoben oder verflochten sind.

Die äußerste dieser Schichten, also S4 (Fig. 3), kann durch reibwertverringernde Trockenschmierstoffzugaben aus z.B. Polytetrafluorethylen (PTFE/Teflon ^{R}) oder seinen Co-Polymeren besonders verschleißmindernd gestaltet sein, wobei diese Zugaben faser- und/oder garn- und/oder pulverförmig sein können.

Nach Fig. 4 soll die an einer Umfangsstelle vorgesehene Teilung des Dichtringes 3 zwischen an den Enden des Grundkörpers 9 sich formschlüssig unmittelbar anschließenden Bauteilen 12,13 vorgesehen sein, die einerseits an über die Grundkörperenden hinweggeführten Abschnitten der Umkleidung 11 festgelegt sind und die sich andererseits mittels örtlich abgeflachter Ringabschnitte 12',13' abdichtend sowie radial und in Umfangsrichtung relativ zueinander beweglich überlappen. Dabei sind an den einander zugekehrten Umfangsflächen der abgeflachten Ringabschnitte 12',13' hakenartig vorspringende Dichtlippen 14,15 angeordnet. Auf diese Weise kann der Dichtring 3 an seinen relativ zueinander beweglichen und abgedichteten Enden mit den Lippen 14,15 hakenartig zusammengehalten werden, z.B. so, daß er trotz verhältnismäßig hoher Vorspannung als praktisch in sich geschlossener Ring günstig montiert werden kann.

Ferner kann der Dichtring 3 einen rechteckigen (Fig.3) oder quadratischen oder an den Ecken gerundeten Querschnitt aufweisen.

Das erfindungsgemäße Verfahren zur Herstellung eines Dichtrings 3 der Einrichtung ist gekennzeichnet durch folgende Schritte:
- Aufbau des Grundkörpers 9 bzw. -kerns als Faserstrang aus einer Vielzahl an Filament-Garnbündeln mit längs, "unidirektional" verlaufender Anordnung der C-Fasern 10,
- kontinuierliche Zuführung des so vorbereiteten Faserstranges einer Schlauchflechtmaschine,
- mehrfache schlauchartige Umflechtung des Faserstranges des Grundkörpers 9 für dessen mehrschichtige Umkleidung 11 (Fig.3), unter ±30° bis ±60° Winkellage der C-Fasern relativ zur Längs- bzw. späteren Umfangsrichtung (Linien L1,L2),
- letzte schlauchartige Umflechtung des so umflochtenen Faserstranges des Grundkörpers 9 unter Einflechtung von Schmierkomponenten in die äußerste Schicht S4 (Fig.3),
- Abbinden und Zerstückeln des so entstandenen Halbzeug-profils in der Umfangslänge des Ringes entsprechende Abschnitte,
- Einbringung des jeweiligen Halbzeug-Profil-Abschnitts in eine dem fertigen Ring 3 angepaßte Hohlform,
- Tränken dieses Halbzeug-Profils mit einem reaktionsfähigen Harz-Gemisch mittels Injektion unter Vakuum und/oder Druck in der Form,
- Aushärtung des so gefertigten Dichtringes in der Form.

In Ausgestaltung des Verfahrens kann der trockene Faserstrang des Grundkörpers 9 über eine den Faserstrang ausrichtende oder formende Düse der Schlauchflechtmaschine zugeführt werden.

In Weiterbildung des Verfahrens kann der Dichtring 3, nach erfolgter Aushärtung an der Trennstelle mit der radial sowie in Umfangsrichtung beweglich dichten Bauteilüberlappung (Fig.4) ausgestattet werden.

## Patentansprüche

1. Einrichtung zur Abdichtung fluidisch unterschiedlich druckbeaufschlagter Räume (R1,R2) zwischen radial beabstandeten, relativ zueinander beweglichen, zylindrischen Gehäusen (1;5,6), insbesondere im Verdichterbereich von Flugtriebwerken, mit mindestens einem am Umfang geteilten Dichtring (3), der in einer Umfangsnut (2) des einen Gehäuses (1) gehalten ist und unter Vorspannung am anderen Gehäuse (5,6) abdichtend aufsitzt, wobei
der Dichtring (3) einen Grundkörper (9) aufweist, der aus einem kohlefaserverstärkten Duroplast-Harz gefertigt ist, mit in Umfangsrichtung verlaufenden Kohlefasern (10),
dadurch gekennzeichnet, daß
- der Grundkörper (9) von einer Umkleidung (11) umgeben ist die aus mehreren Schichten (S1...S4) gebildet ist;
- jede Schicht (S1...S4) aus einer Duroplast-Harz-Matrix mit darin eingebundenen C-Fasern (10',10'') besteht;
- die C-Fasern (10',10") jeder Schicht (S1...S4) in sich überkreuzender Lage am Ringumfang angeordnet sind.

2. Einrichtung nach Anspruch 1, dadurch gekennzeichnet, daß die C-Fasern (10',10") jeder Schicht (S1...S4) der Umkleidung (11') in relativ zur Umfangsrichtung geneigter, sich überkreuzender Anordnung miteinander verwoben sind.

3. Einrichtung nach Anspruch 1 oder 2, dadurch gekennzeichnet, daß die C-Fasern (10',10'') jeder Schicht (S1...S4) jeweils unter einem Winkel ±30° bis ±60°, insbesondere ±45°, relativ zur Umfangsrichtung geneigt angeordnet sind.

4. Einrichtung nach einem der Ansprüche 1 bis 3, dadurch gekennzeichnet, daß die äußerste Schicht (S4) der Verkleidung (11') durch reibwertverringernde Werkstoffzugaben aus Polytetrafluorethylen (PTFE/Teflon ^{R}) oder dessen Co-Polymeren verschleißfest ist, wobei diese Zugaben faser- und/oder garn- und/oder pulverartig sind.

5. Einrichtung nach einem oder mehreren der Ansprüche 2,3 und 4, dadurch gekennzeichnet, daß die Umkleidung (11) mit dem C-Faser-- verstärkten Grundkörper (9) verklebt ist.

6. Einrichtung nach einem oder mehreren der Ansprüche 1 bis 5, dadurch gekennzeichnet, daß die an einer Umfangsstelle vorgesehene Teilung des Dichtringes (3) von an den Enden des Grundkörpers (9) sich formschlüssig anschließenden Bauteilen (12,13) ausgebildet ist, die einerseits an über die Grundkörperenden hinweggeführten Abschnitten der Umkleidung (11') festgelegt sind und die sich andererseits mittels Dichtlippen (14,15) an örtlich abgeflachten Ringabschnitten (12',13') relativ zueinander beweglich überlappen, wobei die Dichtlippen (14,15) an einer hakenartigen Umfangsarretierung ausgebildet sind.

7. Einrichtung nach Anspruch 1, dadurch gekennzeichnet, daß die Dichtung zwischen einem radial äußeren Abschnitt (5) des zellen- oder gondelseitigen Einlaufgehäuses (6) des Flugtriebwerks und einem radial inneren Eintrittsabschnitt eines Niederdruck-- Verdichtergehäuses (1) ausgebildet ist.

8. Einrichtung nach Anspruch 1 oder 7, dadurch gekennzeichnet, daß jeweils ein Dichtring (3) in einer Umfangsnut (2) eines Dichtungsträgers eines radial inneren Gehäuseabschnitts angeordnet ist.

9. Einrichtung nach einem oder mehreren der Ansprüche 1 bis 8, dadurch gekennzeichnet, daß sie eine labyrinthartige Absperrdichtung ausbildet, indem am einen Gehäuse (1) oder -gehäuseabschnitt mehrere in axialer Richtung aufeinander folgende Umfangsnuten (2) mit derartigen Dichtringen (3) vorgesehen sind.

10. Einrichtung nach Anspruch 1, dadurch gekennzeichnet, daß der Dichtring (3) einen rechteckigen oder quadratischen oder zumindest eckenseitig gerundeten Querschnitt aufweist.

11. Verfahren zur Herstellung eines Dichtrings (3) der Einrichtung, gemäß Anspruch 1, welches folgende Verfahrensschritte aufweist:
- Aufbau des Grundkörpers (9) bzw. -kerns als Faserstrang aus einer Vielzahl an Filament-Garnbündeln mit in Umfangsrichtung weisender Anordnung der C-Fasern (10),
- kontinuierliche Zuführung des so vorbereiteten Faserstranges einer Schlauchflechtmaschine,
- mehrfache schlauchartige Umflechtung des Faserstranges des Grundkörpers (9) für dessen mehrschichtige Umkleidung (11) unter sich überkreuzender Anordnung und Winkellage der C-Fasern (10',10") relativ zur Ring-Umfangsrichtung,
- letzte schlauchartige Umflechtung des so umflochtenen Faserstranges des Grundkörpers (9) unter Einflechtung von Schmierkomponenten in die äußerste Schicht (S4),
- Abbinden und Zerstückeln des so entstandenen Halbzeug-profils in auf die Ringlänge abgestimmte Abschnitte,
- Einbringung des jeweiligen Halbzeug-Profil-Abschnitts in eine dem fertigen Ring (3) angepaßte Hohlform,
- Tränken des jeweiligen Halbzeug-Profil-Abschnitts mit einem reaktionsfähigen Harz- Gemisch mittels Injektion unter Vakuum und/oder Druck in der Form,
- Aushärtung des so gefertigten Dichtringes in der Form.

12. Verfahren nach Anspruch 11, dadurch gekennzeichnet, daß der trokkene Faserstrang für den Grundkörper (9) über eine formende Düse der Schlauchflechtmaschine zugeführt wird.

13. Verfahren nach Anspruch 11 oder 12, dadurch gekennzeichnet, daß der Dichtring (3) nach erfolgter Aushärtung an der Trennstelle mit der radial sowie in Umfangsrichtung beweglich dichten Bauteilüberlappung (Fig.4) ausgestattet wird.

## Claims

1. A device for sealing spaces (R1, R2) under different fluid pressures between radially spaced cylindrical housings (1; 5, 6) movable relative to one another, in particular in the compressor region of aircraft engines, comprising at least one sealing ring (3) divided at the circumference and held in a circumferential groove (2) of the one housing (1) and resting against the other housing (5, 6) under pressure so as to provide a seal, wherein the sealing ring (3) has a basic body (9) manufactured from a carbon-fibre-reinforced thermosetting resin with carbon fibres (10) extending in the circumferential direction, characterised in that:
- the basic body (9) is surrounded by a covering (11) formed from a plurality of layers (S1 ... S4);
- each layer (S1 ... S4) comprises a thermosetting resin matrix with C fibres (10', 10") incorporated therein;
- the C fibres (10', 10") of each layer (S1 ... S4) are arranged crosswise on the circumference of the ring.

2. A device according to claim 1, characterised in that the C fibres (10', 10") of each layer (S1 ... S4) of the covering (11') are interwoven in a criss-cross arrangement at an angle to the circumferential direction.

3. A device according to claim 1 or 2, characterised in that the C fibres (10', 10") of each layer (S1 ... S4) are each arranged at an angle of ± 30° to ± 60°, in particular ± 45°, to the circumferential direction.

4. A device according to any one of claims 1 to 3, characterised in that the outermost layer (S4) of the covering (11') is wear-resistant owing to material additions of polytetrafluoroethylene (PTFE/ Teflon®) or copolymers thereof reducing the co-efficient of friction, these additions being in the form of fibres and/or yarn and/or powder.

5. A device according to one or more of claims 2, 3 and 4, characterised in that the covering (11) is glued to the C-fibre-reinforced basic body (9).

6. A device according to one or more of claims 1 to 5, characterised in that the division of the sealing ring (3), provided at a point on the circumference, is formed by components (12, 13) positively adjoining the ends of the basic body (9) and fastened at one end to portions of the covering (11') extending beyond the ends of the basic body and overlapping one another at the other end so as to be movable relative to one another by means of sealing lips (14, 15) on locally flattened ring portions (12', 13'), the sealing lips (14, 15) being formed on a hook-type circumferential stop.

7. A device according to claim 1, characterised in that the seal is formed between a radially outer portion (5) of the airframe or nacelle intake housing (6) of the aircraft engine and a radially inner inlet portion of a low-pressure compressor housing (1).

8. A device according to claim 1 or 7, characterised in that a sealing ring (3) is arranged in each circumferential groove (2) of a seal carrier of a radially inner housing portion.

9. A device according to one or more of claims 1 to 8, characterised in that it forms a labyrinth-type cut-off seal by means of a plurality of axially successive circumferential grooves (2) containing these sealing rings (3) being provided on the one housing (1) or housing portion.

10. A device according to claim 1, characterised in that the sealing ring (3) has a rectangular or square cross-section or a cross-section rounded at least at the corners.

11. A method of manufacturing a sealing ring (3) of the device according to claim 1, comprising the following steps:
- construction of the basic body (9) or core as a fibrous strand comprising a plurality of filament yarn bundles with the C fibres (10) arranged in the circumferential direction;
- continuous feeding of the thus prepared fibrous strand to a tubular braiding machine;
- multiple tubular braiding of the fibrous strand of the basic body (9) for the multi-layered covering (11) thereof with the C fibres (10', 10") in a criss-cross arrangement and at an angle to the circumferential direction of the ring;
- final tubular braiding of the thus braided fibrous strand of the basic body (9) with incorporation of lubricating components into the outermost layer (S4);
- setting and division of the resulting semi-finished profile into portions conforming to the ring length;
- placing of the respective semi-finished profile portion in a hollow mould adapted to the finished ring (3);
- impregnation of the respective semi-finished profile portion with a reactive resin mixture by means of injection under vacuum and/or pressure in the mould;
- hardening of the thus manufactured sealing ring in the mould.

12. A method according to claim 11, characterised in that the dry fibrous strand for the basic body (9) is fed to the tubular braiding machine via a forming die.

13. A method according to claim 11 or 12, characterised in that the sealing ring (3) is provided with the radially and circumferentially movably sealed component overlap (Fig. 4) after hardening has taken place at the point of division.

## Revendications

1. Dispositif pour assurer l'étanchéité vis-à-vis des fluides de chambres (R1, R2) sollicités avec des pressions différentes, entre des boîtiers cylindriques (1 ; 5, 6), mobiles l'un par rapport à l'autre, écartés radialement, notamment dans la plage du compresseur de moteur d'avion, comprenant au moins un joint d'étanchéité (3) divisé à sa périphérie, qui est maintenu dans une rainure périphérique (2) du boîtier (1) et s'appuie de manière étanche avec précontrainte contre l'autre boîtier (5, 6),
dans lequel le joint d'étanchéité (3) comporte un corps de base (9) fabriqué à partir d'une résine thermodurcissable renforcée par des fibres, et des fibres de charbon (10) passant dans la direction périphérique,
caractérisé en ce que
- le corps de base (9) est entouré par une gaine (11) formée de plusieurs couches (S1...S4),
- chaque couche (S1...S4) se compose d'une matrice de résine thermodurcissable intégrant des fibres C (10', 10").

2. Dispositif selon la revendication 1,
caractérisé en ce que
les fibres de carbone (10', 10") de chaque couche (S1...S4) du revêtement (11') sont inclinées par rapport à la direction périphérique avec une disposition croisée pour le tissage.

3. Dispositif selon la revendication 1 ou 2,
caractérisé en ce que
les fibres de carbone (10', 10") de chaque couche (S1...S4) sont inclinées chaque fois suivant un angle de ±30° jusqu'à ±60° et notamment ±45° par rapport à la direction périphérique.

4. Dispositif selon l'une quelconque des revendications 1 à 3,
caractérisé en ce que
la couche extérieure (S4) du revêtement (11') est rendue résistante à l'usure par adjonction de matériaux diminuant le coefficient de frottement à partir de polytétrafluoréthylène (PTFE/Téflon®) et de ses copolymères, ces additifs étant à l'état de fibres et/ou de fils et/ou de poudre.

5. Dispositif selon l'une quelconque des revendications 2 à 4,
caractérisé en ce que
le revêtement (11) est collé avec des fibres C renforçant le corps de base (9).

6. Dispositif selon l'une quelconque des revendications 1 à 5,
caractérisé en ce que
la division du joint d'étanchéité (3) prévu en un point périphérique, est réalisée à partir de l'extrémité du corps de base (9), sous la forme de pièces (12, 13) adjacentes par une liaison par la forme, ces pièces fixant d'une part les segments du revêtement (11') qui passent sur les extrémités du corps de base et qui, d'autre part, se chevauchent d'une manière relativement mobile, par des lèvres d'étanchéité (14, 15) aux segments annulaires coupés, localement (12', 13'), les lèvres d'étanchéité (14, 15) étant réalisées sur un dispositif de blocage périphérique en forme de crochet.

7. Dispositif selon la revendication 1,
caractérisé en ce que
le joint d'étanchéité est réalisé entre un segment radial extérieur (5) du boîtier d'entrée (6) en forme de cellule ou de gondole du moteur d'avion et un segment d'entrée intérieur, radial, d'un boîtier de compresseur basse pression ou haute pression (1).

8. Dispositif selon l'une des revendications 1 et 7,
caractérisé par
chaque fois un joint d'étanchéité (3) placé dans une rainure périphérique (2) d'un support de joint d'étanchéité d'un segment de boîtier radialement à l'intérieur.

9. Dispositif selon l'une ou plusieurs des revendications 1 à 8,
caractérisé en ce qu'
il est formé comme joint de coupure en labyrinthe, en ce que sur le boîtier (1) ou un segment de boîtier, sont prévus plusieurs rainures périphériques (12) qui concourent dans une direction axiale, ces rainures ayant de tels joints d'étanchéité (3).

10. Dispositif selon la revendication 1,
caractérisé en ce que
le joint d'étanchéité (3) a une section rectangulaire ou carrée ou au moins arrondie côté coin.

11. Procédé de fabrication d'un joint d'étanchéité (3) de l'installation selon la revendication 1,
comprenant les étapes suivantes :
- réalisation du corps de base (9) ou du noyau comme- cordon de fibres à partir d'un grand nombre de faisceaux de fils de filaments avec une disposition des fibres C (10) tournée en direction périphérique.
- alimentation en continu du cordon de fibres ainsi préparé d'une machine à tressage de tubes,
- tressage tubulaire multiple des cordons de fibres du corps de base (9) pour son revêtement à plusieurs couches (11) avec disposition croisée et position angulaire des fibres de carbone (10', 10") par rapport à la direction périphérique annulaire,
- dernier tressage tubulaire du cordon de fibres non tressées du corps de base (9) en intégrant dans le tressage des composants de graissage dans la couche extérieure (S4),
- couper et morceler le profil semi-fini obtenu en des segments dépendant de la longueur annulaire,
- introduction des segments de profilés produits semi-finis respectifs dans un moule creux adapté à l'anneau fabriqué (3),
- imprégnation du segment de profilé semi-fini respectif avec un mélange de résine susceptible de réagir par injection sous vide et/ou pression dans le moule,
- durcissement du joint d'étanchéité ainsi fabriqué dans la forme.

12. Procédé selon la revendication 11,
caractérisé en ce que
le cordon de fibres sec est fourni par l'intermédiaire du corps de base (9), par une buse de mise en forme de la machine de tressage de tube.

13. Procédé selon l'une quelconque des revendications 11 ou 12,
caractérisé en ce que
le joint d'étanchéité (3) une fois durci, est muni au point de coupure avec le point de chevauchement de pièces, radiales, étanches (figure 4), en restant mobile dans la direction périphérique.
